# EUROPEAN PATENT APPLICATION

(11) **EP 1 061 513 A1**
(43) Date of publication of application: **20.12.2000**
(21) Application number: 00112695.2
(22) Date of filing: 15.06.2000
(51) Int. Cl.: G11B 19/12, G11B 19/04

(54) **Optical disc forcedly writable without certification and recording method using the disc**

(30) Priority: 16.06.1999 JP 17005599
(71) Applicant: ALPS ELECTRIC CO., LTD., Ota-ku Tokyo (JP)
(72) Inventor: Furuta, Kenji, c/o Alps Electric Co., Ltd., Ota-ku, Tokyo (JP); Yamashita, Tatsumaro, c/o Alps Electric Co., Ltd., Ota-ku, Tokyo (JP)
(74) Representative: Klunker . Schmitt-Nilson . Hirsch

(57) **Abstract**

In the present invention, an identification signal (immediate write signal) for changing the operation mode of a recording apparatus to the write mode forcedly is added in the disc state information area of an optical disc, and when an optical disc to which the code is added is inserted into a recording apparatus, the operation mode of the recording apparatus is preferentially set to "recording waiting mode". Thereby, the operator can start recording immediately, and will not miss the important video scene.

## Description

### BACKGROUND OF THE INVENTION

### Field of the Invention

This invention relates to an optical disc that is writable of various types of information (for example, a magneto-optical disc), and more particularly relates to an optical disc that is capable of recording of the data in real time, particularly video movie, and a recording method for recording the information in such optical disc.

### Description of the Related Art

Heretofore, the optical disc that is writable of the information (for example, magneto-optical disc) has been used mainly for storing the data in a computer (PC).

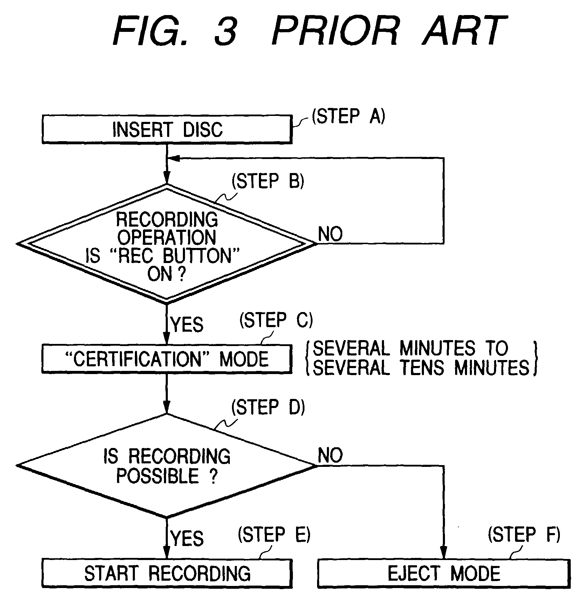

FIG. 3 is a flow chart for describing the conventional writing operation performed when an optical disc is inserted.

As shown in FIG. 3, in the case of a conventional PC, when an optical disc is inserted (step A), the sequence waits for a recording operation by an operator (step B). When an operator pushes a recording operation button (REC button), the sequence proceeds to the "certification" mode in step C.

In the "certification" mode, the defect on the optical disc is certified. In this mode, the data on the optical disc is read actually from the inner circumference to the outer circumference of the optical disc, and the defect on the optical disc is detected. If a defect is found, an exchange sector to be used instead of the defect sector is allocated on the spare area that is provided previously on the optical disc. The method for allocating the exchange sector is different depending on the specification of an optical disc, the information is written on the tail of the read in area of the inner circumferential side or on the head of the read out area of the outer circumferential side of an optical disc as the defect list. Simultaneously, the defect list is registered in the memory of a recording apparatus.

In the "certification" mode, the whole data recording area of an optical disc is detected for the defect, and if no defect is found, the recording apparatus decides the optical disc to be "recordable" (step D), and recording operation starts.

If extraordinarily many defects are found during "certification" mode in step C, then the recording apparatus decides the optical disc to be "unable to write", the decision is informed to an operator and the optical disc is ejected (step F).

The above-mentioned "certification" mode is indispensable function in the case that the optical disc is used for a PC, in which case high reliability is required for the optical disc.

However, it is expected in future that the optical disc is used for recording the image namely for AV. In the application of an optical disc for AV, "certification" mode that is activated every time when the optical disc is inserted into a recording apparatus could causes a problem when it is required to record the image on the optical disc immediately.

In other words, in the case of the application for AV, if "certification" mode is activated as described herein above though not so high reliability as used for PC is required, then a long waiting time is necessary concomitantly before starting of image recording, and for example, in the case of a video camera, an operator misses the chance of image taking resultantly.

### SUMMARY OF THE INVENTION

The present invention has been accomplished to solve the above-mentioned problem, it is the object of the present invention to provides an optical disc having the function that whether "certification" operation is necessary or not is decided depending on the application or type of the disc based on the information recorded on the disc, and if the disc is decided to be a disc that does not need "certification" operation, then recording operation is activated immediately, and to provide a recording method for recording the information on such optical disc.

An optical disc of the present invention is a data writable optical disc characterized in that the optical disc has an identification signal added in the information area of the optical disc for controlling a recording apparatus to perform write operation forcedly without certification (operation for certifying the detect sector) when the optical disc is inserted into the recording apparatus.

A method for recording on an optical disc of the present invention is characterized in that the mode for data write starting is activated forcedly regardless that the optical disc has been subjected to the certification at the time of formatting and subjected to the second and following certification when the optical disc having the identification signal for activating the write mode of the recording apparatus is inserted.

In the present invention, the recording apparatus side can find whether the optical disc has the identification signal or not when the optical disc is inserted into the recording apparatus, whether certification operation is to be performed or not is thereby determined automatically.

In detail, when an optical disc (for AV) to which the identification signal is added (for example, "1") is inserted into a recording apparatus, the operation mode of the recording apparatus is changed to "recording waiting mode" preferentially, and the recording operation is performed immediately without certification.

The above-mentioned optical disc is a phase change type recording medium and mainly involves DVD-RAM, but maybe, for example, CD-RW (CD-ReWritable), MD (Mini Disc), PD (Phasc Disc), MO (Magnet Optical), or HS (Hyper Strage) as long as it is a writable disc.

In the above-mentioned invention, it is preferable that the identification signal is written depending on the selection of the operator when the optical disc having no added identification signal is inserted.

In the structure as described herein above, when an optical disc having no added identification signal is inserted, for example, the insertion is informed to an operator, whether the identification signal is to be written on the optical disc or not is confirmed, and the identification signal is written on the optical disc when the operator instructs it. The written identification signal allows the operation mode to be changed to the data recording starting mode for recording the data on optical disc immediately. On the other hand, when an optical disc that requires certification like an optical disc for PC, the optical disc is ejected from the recording apparatus, and erroneous overwriting of the recording data on the optical disc for PC is thereby prevented.

Furthermore, when the above-mentioned forced write starting mode is set, if recording start operation is performed within a predetermined time, then the operation mode is changed to forced write operation, on the other hand if recording start operation is not performed within the predetermined time, then the operation mode is changed to the certification operation.

In the structure as described herein above, though the operation mode is changed to the forced write starting mode when an optical disc having recorded identification signal is inserted, in this mode, there is a predetermined waiting time to identify whether an operator intends to perform recording operation or not. If there is no operation for recording within the predetermined waiting time, the operation mode is changed to the certification mode. By means of the waiting time, it is possible to select the immediate recording or certification.

### BRIEF DESCRIPTION OF THE DRAWINGS

FIG. 1 is an explanatory diagram for describing allocation of the area on an optical disc.
FIG. 2 is a flow chart for describing the flow performed when an optical disc is inserted into a recording apparatus in the present invention.
FIG. 3 is a flow chart for describing writing operation performed when a conventional disc is inserted into a recording apparatus.

### DETAILED DESCRIPTION OF THE PREFERRED EMBODIMENTS

The present invention will be described in detail hereinafter with reference to the drawings.

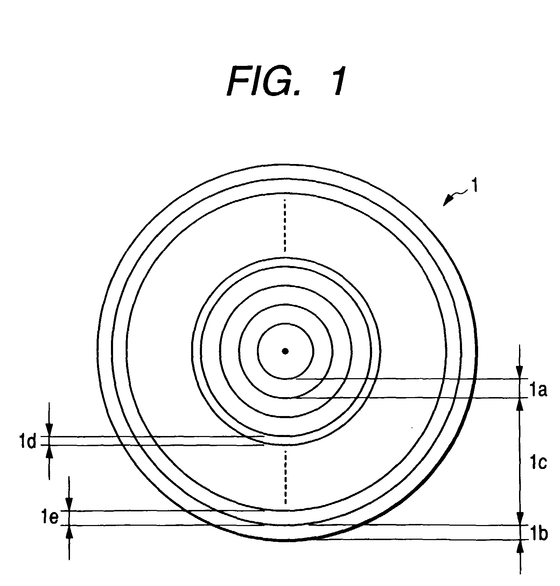

FIG. 1 is an explanatory diagram for describing allocation of the area of an optical disc. The optical disc shown in FIG. 1 is, for example, a writable DVD-RAM having a large capacity.

Because an optical disc such as a DVD-RAM has a large capacity, a DVD-RAM is used not only for date recording in a computer (for PC) but also for audio and/or image data recording (for AV).

As shown in FIG. 1, an optical disc 1 has the read in area 1a on the innermost circumferential area, the read out area 1b on the outermost circumferential area, and the data area 1c between the read in area 1a and the read out area 1b. Spare areas 1d and 1e are provided between the inner circumferential side of the data area 1c and the read in area 1a and on the outer circumferential side of the data area 1c respectively.

On the optical disc 1, the detect management is performed to assure the reliability of the data. The defect on an optical disc is categorized into the primary detect and the secondary defect. The primary defect is further categorized into the defect that is found in certification (primary defect certification) performed in the first formatting of the optical disc 1 including formatting at the time of factory shipment and the defect that is found in the second and following certification performed before an operator (user) who bought the optical disc 1 records the information on the optical disc 1. The former is referred to as "primary defect certification" and the latter is referred to as "second and following certification" hereinafter. During certification, defects in the data area 1c are detected, and exchange sector where the video data is recorded instead of the defect sector is allocated on the above-mentioned spare areas 1d and 1e.

At the time of factory shipment, usually an optical disc is in the state that a code for indicating that "primary defect certification" had done (set to "1") is added. On the other hand, when an optical disc is inserted into a conventional PC, always the second and following certification is carried out, and the result is recorded as the secondary defect.

The above-mentioned primary defect and the secondary defect are doubly recordable on the tail of the read in area 1a and on the head of the read out area 1b as the primary defect list (PDL) and the secondary defect list that are the list expression of the defect state.

In the present invention, a data information recording area where "immediate write signal" (identification signal) is to be added is provided on a predetermined recording area on an optical disc 1. If the optical disc 1 is an optical disc for AV, a signal equivalent to "1" is written (added) on the data information recording area, and on the other hand if the optical disc 1 is an optical disc for PC, the data information recording area remains "0" (no recording). The optical disc 1 having the data information recording area in which a signal equivalent to "1" is recorded is manufactured and sold as an Optical disc for AV, and the optical disc 1 having the data information recording area in which a signal equivalent to "0" is recorded is manufactured and sold as an optical disc for PC. Otherwise, a user who bought an optical disc 1 may record the above-mentioned immediate write signal "1" of user's own will when the user uses the optical disc for AV.

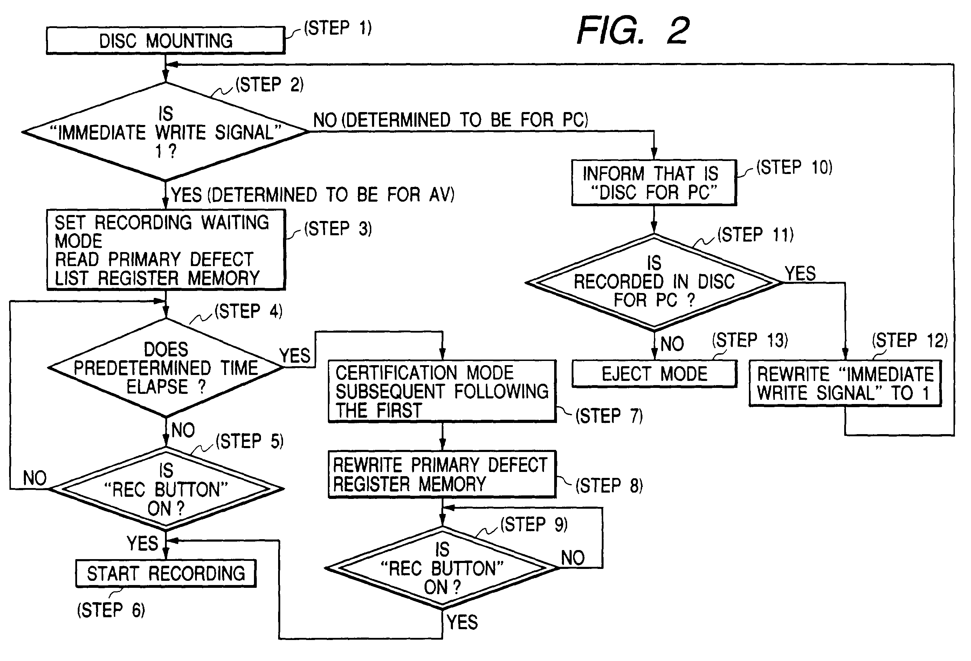

FIG. 2 is a flow chart for describing the flow carried out when an optical disc is inserted into a recording apparatus in the present invention.

The recording apparatus that operates accordingly to the flow chart shown in FIG. 2 is an AV recorder, for example, a video camera or home video deck.

### [The case in which an immediate write disc optical disc is inserted]

When an immediate write disc optical disc 1 (for example, optical disc for AV) is inserted into the recording apparatus (step 1), the recording apparatus reads the recorded information in the above-mentioned disc information recording area on the optical disc 1 (step 2) . If "1" is recorded in the data information recording area, that is, if "immediate write signal" is added, then the optical disc 1 that has been inserted into the recording apparatus is decided to be an immediate write disc optical disc for AV. Then, the recording waiting mode is set (step 3).

In the recording waiting mode, the primary defect list (the defect list recorded at the time of factory shipment) recorded at the tail of the read in area 1a and the head of the read out area 1b receives an access, and the existence of "certified" code is checked. If the "certified" code is "1", then the position of the defect found during "primary defect certification" is read out, and registered in the memory provided in the recording apparatus (step 3). Otherwise, if the "certification" had done after purchase, the position of the defect is read out from the defect list prepared at that time, and registered in the memory as in the case described herein above.

In this recording apparatus, even if the above-mentioned "certified" code is "0", the "recording waiting mode" in which the optical disc 1 is ready for writing is activated. In other words, regardless of whether the primary certification has been done or not and whether secondary certification has been done or not, the recording waiting mode is activated forcedly.

When the above-mentioned "recording waiting mode" is activated, a timer is operated in step 4 to measure the time, and the whether the time proceeds to the previously set predetermined time or not is always monitored thereby (step 4). The predetermined time is preferably in a range from 30 seconds to 1 minute.

"REC button" is operated in step 5 within the predetermined time shown in step 4, recording starts (step 6), and recording on the optical disc 1 starts. The defect list of "primary certification" registered in the memory is referred during recording operation of the data. When the recording comes close to the above-mentioned primary defect sector in the data area 1c, the recording defects from the defect sector to the exchange sector allocated in the spare area 1d or 1e, and the video data is written on the exchange sector (slip exchange). Then, the recording returns to the data area 1c again, and the video data is written on from the normal sector next to the previous defect sector. Otherwise, if the optical disc 1 is decided to be an optical disc having little defect as the result of reference to the defect list acquired in step 3, the video data may be recorded on the defect sector continuously in disregard of the defect list.

As described herein above, when the optical disc 1 having "immediate write signal", for example, an optical disc 1 set for AV is inserted, the mode of the recording apparatus proceeds to "recording waiting mode" (step 4) forcedly without proceeding to "certification" mode. As the result, the recording apparatus starts writing immediately without waiting time for completion of certification.

Therefore, the time loss from the insertion of the optical disc 1 to activation of the recording waiting mode, namely the time loss for obtaining the decision of an operator and the time loss for entering the decision content to the recording apparatus can be avoided.

When a predetermined time elapses without operation of the "REC" button in step 4, the operation mode of the recording apparatus proceeds to "certification" mode (step 7).

In "certification" mode, "second and following certification" operation is carried out automatically as in the case of the conventional optical disc for PC. After completion of certification, the code is rewritten to "certified" code. At that time, when a defect different from the defect found in the primary defect certification at the time of factory shipment is found, the primary defect list (PDL) is written. In step 8, the defect found in the second and following certification is stored in a memory in the recording apparatus.

The sequence waits for pushing of "REC" button in step 9, and when the button is pushed, the recording apparatus starts recording (step 6). In this case, the defect list that is rewritten in the above-mentioned "second and following certification" is referred, and the data is recorded in sectors having no defect. In other words, the recording operation is the same as that for recording on the conventional optical disc for PC in this case. In this case, because the data is not recorded on the defective sector, high accuracy video signal can be recorded.

### [The case in which a non immediate write disc optical disc is inserted]

On the other hand, when a non immediate write disc, for example, an optical disc for PC is inserted, the following operation is performed.

The optical disc 1 is inserted in step 1 shown in FIG. 2, the above-mentioned data information recording area is read in step 2, at that time if it is found that the immediate write signal is not recorded and "0" is set, then the optical disc 1 is decided to be, for example, an optical disc for PC.

In this case, a notice for indicating that the inserted disc is a disc for PC is given to an operator by means of an image displayed on the above-mentioned liquid crystal display or voice (step 10).

In step 11, the operator selects whether the video signal is written on the optical disc 1 or not.

In step 10, for example, "is the data recorded in this optical disc (for PC)?" is displayed, and if the operator selects "YES" in step 11, then the sequence proceeds to write operation on the optical disc 1. In this case, "immediate write signal" is added to the data information recording area in step 12, and the sequence proceeds to step 2. Thereby, in step 2, the disc is decided to be an immediate write disc, and the sequence proceeds to the flow of step 3 and following steps.

On the other hand, the operation selects "NO" in step 11, the operation mode of the recording apparatus is set to the eject mode, and the optical disc 1 is ejected (step 13).

As described herein above, in the case that, for example, an optical disc 1 used for PC is inserted, the data is recorded on the optical disc 1 depending on the recognition and selection of the operator. As the result, it is prevented that the video data is overwritten erroneously on the optical disc 1 which has been set so as not to be subjected to immediate write by use of a recording apparatus for recording video data like an optical disc for PC.

In the above-mentioned embodiment, a DVD-RAM is exemplified mainly as the optical disc, but for example, a CD-RW (CD-ReWritable), MD (Mini Disc), PD (Phasc Disc), MO (Magnet Optical), or HS (Hyper Strage) may be used as long as it is a writable disc.

In the description hereinbefore, the case in which an image is recorded by use of a video movie, but otherwise the present invention may be applied to the case in which only the voice is recorded.

According to the present invention described in detail hereinbefore, in the case that an optical disc having the added identification signal is inserted into a recording apparatus such as a recording apparatus for recording the image in which quick recording has priority to the reliability of the disc, the recording apparatus immediately starts writing operation without going to certification. As the result, the waiting time is eliminated.

On the other hand, in the case that an optical disc having no identification signal to be used for PC is inserted into a recording apparatus for recording image data, an operator can immediately select whether recording is to be started or not and it is prevented that the video data is erroneously overwritten on a disc to be used for PC.

## Claims

1. A data writable optical disc having an identification signal added in the information area of the optical disc for controlling a recording apparatus to perform write operation forcedly without certification (operation for certifying the detect sector) when the optical disc is inserted into the recording apparatus.

2. A method for recording on an optical disc for writing the data on the optical disc in which the mode for data write starting is activated forcedly regardless that the optical disc has been subjected to the certification at the time of formatting and the second and following certification when the optical disc having the identification signal for activating the write mode of the recording apparatus is inserted.

3. The method for recording on an optical disc according to claim 2, wherein the identification signal can be written on an optical disc depending on the selection of an operator when an optical disc having no identification signal is inserted.

4. The method for recording on an optical disc according to claim 2 or 3, wherein, when the forced write is set to the mode for starting, if recording start operation is performed within a predetermined time, then the sequence proceeds to the forced write operation, on the other hand if recording start operation is not performed within the predetermined time, then the sequence proceeds to the certification operation.
